# EUROPÄISCHE PATENTANMELDUNG

(11) **EP 0 807 663 A2**
(43) Veröffentlichungstag der Anmeldung: **19.11.1997**
(21) Anmeldenummer: 97107258.2
(22) Anmeldetag: 02.05.1997
(51) Int. Cl.: C08L 23/12, C08L 23/06

(54) **Hochzähe Polyolefinmischungen**

(30) Priorität: 15.05.1996 DE 19619625
(71) Anmelder: HOECHST AKTIENGESELLSCHAFT, 65929 Frankfurt am Main (DE)
(72) Erfinder: Niebergall, Ute, 14167 Berlin (DE); Bohse, Jürgen, 14193 Berlin (DE); Schürmann, Britta, 12203 Berlin (DE); Grellmann, Wolfgang, Prof. Dr., 06132 Halle/Saale (DE)

(57) **Zusammenfassung**

Die erfindungsgemäßen Mischungen aus Polyethylen und Polyproylen mit verbesserter Kerbschlagzähigkeit zeichnen sich dadurch aus, daß sie
a) 36 bis 64 Gew.-% isotaktisches Propylenhomopolymer,
b) 35 bis 63 Gew.-% hochdichtem Polyethylen (HDPE) und
c) 1 bis 10 Gew.-% statistisches Copolymerisat mit 75 bis 85 Gew.-% Ethylen- und 15 bis 25 Gew.-% Propyleneinheiten
enthalten, wobei alle Angaben in Gew.-% bezogen sind auf das Gesamtgewicht der jeweiligen Mischung.

## Beschreibung

Die vorliegende Erfindung betrifft Mischungen aus Polyethylen und Polyproylen mit verbesserter Kerbschlagzähigkeit.

In der Technik besteht zunehmend Bedarf an preisgünstigen Thermoplasten mit guten mechanischen Eigenschaffen, insbesondere mit hoher Bruchzähigkeit bei gleichzeitig ausgewogenen Steifigkeits- und Festigkeitseigenschaften, die sich aber insbesondere unter standardisierten Bedingungen störungsfrei zu Formteilen verarbeiten lassen. Die Rohstoffhersteller versuchen, diesen Bedarf durch Copolymerisate oder durch mit Elastomeren modifizierte Thermoplaste zu decken, was allerdings nachteiligerweise zu den unterschiedlichsten Spezifikationen führt.

Reines Polypropylen erweist sich bei niedrigen Temperaturen als ausgesprochen spröde. Zur Verbesserung der Tieftemperatur-Schlagzähigkeit ist im Stand der Technik die Elastomermodifizierung von Polypropylen beschrieben. Ebenso kann die Zähigkeit bei niederen Temperaturen durch Zugabe von Ethylenpolymeren (HDPE, LDPE, LLDPE) verbessert werden.

Mischungen aus den beiden Thermoplasten Polypropylen (PP) und Polyethylen (PE) sind schon seit langer Zeit bekannt. Auf Grund der Inkompatibilität der beiden teilkristallinen Polymeren treten bei solchen Mischungen nach dem Verarbeitungsprozess Separierungen auf, die beispielsweise in einem spritzgegossenem Formteil durch eine ungünstigen Phasenmorphologie zu Bindenahtproblemen führen können.

Bekannt ist auch, daß beispielsweise kleine Verunreinigungen von PP in PE-HD (HD = high density) die Fertigteileigenschaften erheblich beeinträchtigen können. Dies spielt insbesondere beim Recycling von Polyolefinen eine sehr wichtige Rolle.

Die EP-A 462 373 hingegen beschreibt Mischungen von Standardpolymeren aus Ethylen und Propylen, die einen maximalen Anteil an Polyethylen von etwa 30 Gew.-% aufweisen, und die EP-B 462 448 beschreibt ähnliche Mischungen aus den gleichen Einzelkomponenten, die einen maximalen Anteil an isotaktischem Polyproylen von etwa 35 Gew.-% und einen Anteil an statistischem Propylencopolymerisat von wenigstens 7 Gew.-% und mehr besitzen. Die in den beiden Literaturstellen bechriebenen Mischungen sind aber in bezug auf ihre Steifigkeit und Kerbschlagzähigkeit bei gleichzeitig hoher MFR (MFR = Melt Flow Rate gemäß ISO 1133) noch verbesserungswürdig.

Aufgabe der vorliegenden Erfindung war es daher, eine Mischung zu finden, die einerseits lediglich aus Standardpolymeren zusammengesetzt ist, andererseits aber Zähigkeits- und Fließeigenschaften besitzt, die über das bekannte Niveau hinausgehen.

Gelöst wird diese Aufgabe erfindungsgemäß durch Mischungen der eingangs genannten Gattung, deren Kennzeichenmerkmale darin zu sehen sind, daß sie
a) 36 bis 64 Gew.-% isotaktisches Propylenhomopolymer (iPP),
b) 35 bis 63 Gew.-% hochdichtem Polyethylen (HDPE) und
c) 1 bis 10 Gew.-% statistisches Copolymerisat mit 75 bis 85 Gew.-% Ethylen- und 15 bis 25 Gew.-% Propyleneinheiten
enthalten, wobei alle Angaben in Gew.-% bezogen sind auf das Gesamtgewicht der jeweiligen Mischung.

Überraschenderweise wurde gefunden, daß sich bei Mischungen im Bereich von etwa 3:1 bis 1:3 aus den beiden inkompatiblen Einzelkomponenten iPP und PE-HD geeigneter Zusammensetzung und Fließfähigkeit ein Blend herstellen läßt, das eine feindisperse interpenetrierende Phasenmorphologie und eine exzellente mechanische Eigenschaftskombination aus Steifigkeit und Kerbschlagzähigkeit mit sich bringt.

Als isotaktisches Propylenhomopolymer der Einzelkomponente a) wird erfindungsgemäß vorzugsweise ein Polypropylen mit einem Isotaxie-index im Bereich von 95 bis 98, bestimmt nach der Heptan-Extraktionsmethode gemäß ISO 6427, eingesetzt. Das bevorzugte Polypropylen besitzt ferner einen MFR im Bereich von 0,2 bis 1,0 g/10 min, bestimmt gemäß ISO 1133 bei einem Auflagegewicht von 5 kg und einer Temperatur von 190 °C, vorzugsweise im Bereich von 0,3 bis 0,7 g/10 min. Die erfindungsgemäß bevorzugte Menge an isotaktischen Propylenhomopolymer liegt im Bereich von 40 bis 60 Gew.-%, insbesondere von 45 bis 55 Gew.-%, besonders bevorzugt von 48 bis 52 Gew.-%.

Als HDPE der Einzelkomponente b) wird erfindungsgemäß bevorzugt ein Ehtylencopolymeres mit einem Anteil von 2 bis 3 Gew.-% an 1-Olefinen mit 3 bis 10 C-Atomen, vorzugsweise mit 4 bis 8 C-Atomen, die einen MFR im Bereich von 10 bis 20 g/10 min besitzen, bestimmt gemäß ISO 1133 bei einem Auflagegewicht von 21,6 kg und einer Temperatur von 190 °C, bevorzugt von 13 bis 19 g/10 min. Die erfindungsgemäß bevorzugte Menge an HDPE liegt im Bereich von 40 bis 60 Gew.-%, insbesondere von 45 bis 55 Gew.-%, besonders bevorzugt von 48 bis 52 Gew.-%.

Als statistisches Copolymerisat der Einzelkomponente c) wird erfindungsgemäß bevorzugt ein Haftvermittler aus einem Copolymerisat mit 77 bis 82 Gew.-% Ethylen- und 18 bis 23 Gew.-% Propyleneinheiten eingesetzt, das einen MFR im Bereich von 0,5 bis 2,0 g/10 min besitzt, bestimmt gemäß ISO 1133 bei einem Auflagegewicht von 5 kg und einer Temperatur von 230 °C, vorzugsweise von 0,7 bis 1,5 g/10 min. Die erfindungsgemäß bevorzugte Menge an statistischem Copolymerisat der Einzelkomponente c) liegt im Bereich von 3 bis 6 Gew.-%.

Die Erfindungsgemäßen Mischungen enthalten ferner gegebenenfalls noch einen Thermostabilisator auf Basis von sterisch gehinderten Aminen oder von phenolischen Antioxidantien in einer Menge von 0 bis 0,8 Gew.-%, vorzugsweise von 0,1 bis 0,6 Gew.-%.

Das Herstellen der erfindungsgemäßen Mischungen erfolgt in üblichen Schneckenextrudern, deren Zylindertemperaturen zweckmäßigerweise im Bereich von 190 bis 210 °C eingestellt werden, wobei sich Massetemperaturen im Bereich von 215 bis 240 °C einstellen.

Die nachfolgenden Ausführungsbeispiele sollen die Erfindung für den Fachmann noch augenscheinlicher darstellen.

### Beispiel 1

In einem Einschneckenextruder der Firma Krauss Maffei, der mit einer PE-Mischschnecke ausgerüstet war, wurden verschiedene Mischungen mit unterschiedlichen Anteilen an Komponente a) und b) bei einer Temperatur von 210 °C hergestellt. Die einzelnen Anteile ergeben sich aus der nachfolgenden Tabelle 1. In den so hergestellten Mischungen war alternativ entweder der Haftvermittler aus einem statistischen Copolymerisat aus 78 Gew.-% Ethylen- und 22 Gew.-% Propyleneinheiten als Komponente c) in einer Menge von 5 Gew.-%, bezogen auf das Gesamtgewicht der Mischung, enthalten oder der Haftvermittler fehlte ganz, d.h. die Mischungen bestanden nur aus den Komponenten a) und b).

Gemäß ISO 1133 wurden dann die MFR-Werte der so hergestellten Mischungen bei einem Auflagegewicht von 5 kg und einer Temperatur von 190 °C bestimmt und sind in der nachstehenden Tabelle 1 aufgeführt.

**Tabelle 1**

| Schmelzindex MFR 190/5 | | |
|---|---|---|
| | Schmelzindex in g/10 min | |
| PE in % | ohne HV | mit HV |
| 0 | 0,46 | |
| 5 | 0,44 | 0,45 |
| 10 | 0,45 | 0,46 |
| 15 | 0,46 | 0,48 |
| 20 | 0,47 | 0,49 |
| 30 | | 0,52 |
| 40 | | 0,52 |
| 50 | 0,53 | 0,54 |
| 60 | | 0,51 |
| 70 | | 0,48 |
| 80 | 0,43 | 0,46 |
| 85 | 0,41 | 0,43 |
| 90 | 0,4 | 0,42 |
| 95 | 0,4 | 0,4 |
| 100 | 0,38 | |

### Beispiel 2

Aus den Mischungen gemäß Beispiel 1 wurden durch Spritzguß Normprüfstäbe gemäß ISO/DIS 3167, Typ A, bei einer Temperatur von 250 °C hergestellt. Elektronenmikroskopische Untersuchung der Prüfstäbe zeigte, daß eine sehr feindisperse Phasenverteilung der Mischungskomponenten vorlag.

An den Prüfstäben wurde dann die Kerbschlagzähigkeit gemäß ISO 179/eA bei Raumtemperatur gemessen, die Meßergebnisse sind in der nachfolgenden Tabelle 2 zusammengestellt.

**Tabelle 2**

| Kerbschlagzähigkeit ISO 179/1eA RT | | |
|---|---|---|
| | | |

| PE in % | Kerbschlagzähigkeit in kJ/m | |
|---|---|---|
| | ohne HV | mit HV |
| 0 | 10,76 | |
| 5 | 17,25 | 27,02 |
| 10 | 17,41 | 28,01 |
| 15 | 15,49 | 30,12 |
| 20 | 17,78 | 34,28 |
| 30 | 15,93 | 40,72 |
| 40 | 19,2 | 76,27 |
| 50 | 24,85 | 98,55 |
| 60 | 29,11 | 83,39 |
| 70 | 26,83 | 74,26 |
| 80 | 18,21 | 41,4 |
| 85 | 14,87 | 31,76 |
| 90 | 17,34 | 29,68 |
| 95 | 15,16 | 26,39 |
| 100 | 18,34 | |

Aus den Meßwerten des Beispiels 2 erweist sich, daß in dem erfindungsgemäßen Bereich der Mengen der Einzelkomponenten der Dreierkombination aus a) isotaktischem Polypropylen, b) HDPE und c) Haftvermittler Kennwerte erreicht wurden, die weit oberhalb der Mischungsregel oder der Ausgangszähigkeit der Einzelkomponenten liegen.

### Beispiel 3

Aus den Mischungen gemäß Beispiel 1 wurden wie in Beispiel 2 durch Spritzguß weitere Normprüfstäbe gemäß ISO/DIS 3167, Typ A, bei einer Temperatur von 250 °C hergerstellt. An diesen weiteren Prüfstäben wurde dann gemäß DIN 53457 der E-Modul (E = Elastizität) bei Raumtemperatur gemessen. Die Meßergebnisse sind in der nachfolgenden Tabelle 3 aufgeführt.

**Tabelle 3**

| E-Modul DIN 53457 | | | |
|---|---|---|---|
| | | | |
| PE in % | E-Modul in | GPa | |
| | ohne HV | mit HV | |
| 0 | 1,37 | | |
| 5 | 1,42 | 1,28 | |
| 10 | 1,45 | 1,28 | |
| 15 | 1,42 | 1,27 | |
| 20 | 1,39 | 1,25 | |
| 30 | 1,31 | 1,15 | |
| 40 | 1,24 | 1,11 | |
| 50 | 1,13 | 1 | |
| 60 | 1,04 | 0,93 | |
| 70 | 0,96 | 0,86 | |
| 80 | 0,87 | 0,79 | |
| 85 | 0,85 | 0,74 | |
| 90 | 0,84 | 0,71 | |
| 95 | 0,8 | 0,72 | |
| 100 | 0,77 | | |

Es zeigte sich überraschend, daß in dem erfindungsgemäßen Bereich der Mengen der Einzelkomponenten der Dreierkombination aus a) isotaktischem Polypropylen, b) HDPE und c) Haftvermittler Kennwerte erreicht wurden, die gut im Rahmen der Mischungsregel liegen, wodurch die feindisperse Phasenmorphologie zum Ausdruck kommt.

## Patentansprüche

1. Mischungen aus Polyethylen und Polyproylen mit verbesserter Kerbschlagzähigkeit, dadurch gekennzeichnet, daß sie
a) 36 bis 64 Gew.-% isotaktisches Propylenhomopolymer,
b) 35 bis 63 Gew.-% hochdichtem Polyethylen (HDPE) und
c) 1 bis 10 Gew.-% statistisches Copolymerisat mit 75 bis 85 Gew.-% Ethylen- und 15 bis 25 Gew.-% Propyleneinheiten
enthalten, wobei alle Angaben in Gew.-% bezogen sind auf das Gesamtgewicht der jeweiligen Mischung.

2. Mischungen nach Anspruch 1, dadurch gekennzeichnet, daß als isotaktisches Propylenhomopolymer der Einzelkomponente a) ein Polypropylen mit einem Isotaxie-Index im Bereich von 95 bis 98, bestimmt gemäß ISO 6427 eingesetzt wird.

3. Mischungen nach Anspruch 2, dadurch gekennzeichnet, daß das Polypropylen einen MFR im Bereich von 0,2 bis 1,0 g/10 min, bestimmt gemäß ISO 1133 bei einem Auflagegewicht von 5 kg und einer Temperatur von 190 °C, vorzugsweise im Bereich von 0,3 bis 0,7 g/10 min, besitzt.

4. Mischungen nach einem der Ansprüche 1 bis 3, dadurch gekennzeichnet, daß die Menge an isotaktischem Propylenhomopolymer im Bereich von 40 bis 60 Gew.-% liegt, insbesondere von 45 bis 55 Gew.-%, besonders bevorzugt von 48 bis 52 Gew.-%.

5. Mischungen nach einem der Ansprüche 1 bis 4, dadurch gekennzeichnet, daR als HDPE der Einzelkomponente b) ein Ehtylencopolymeres mit einem Anteil von 2 bis 3 Gew.-% an 1-Olefinen mit 3 bis 10 C-Atomen, vorzugsweise mit 4 bis 8 C-Atomen, eingesetzt wird.

6. Mischungen nach einem der Ansprüche 1 bis 5, dadurch gekennzeichnet, daß das HDPE der Komponente 2 einen MFR im Bereich von 10 bis 20 g/10 min besitzt, bestimmt gemäß ISO 1133 bei einem Auflagegewicht von 21,6 kg und einer Temperatur von 190 °C, bevorzugt von 13 bis 19 g/10 min.

7. Mischungen nach einem der Ansprüche 1 bis 6, dadurch gekennzeichnet, daß die Menge an HDPE im Bereich von 40 bis 60 Gew.-% liegt, insbesondere von 45 bis 55 Gew.-%, besonders bevorzugt von 48 bis 52 Gew.-%.

8. Mischungen nach einem der Ansprüche 1 bis 7, dadurch gekennzeichnet, daß als statistisches Copolymerisat der Einzelkomponente c) ein Haftvermittler aus einem Copolymerisat mit 77 bis 82 Gew.-% Ethylen- und 18 bis 23 Gew.-% Propyleneinheiten eingesetzt wird.

9. Mischungen nach einem der Ansprüche 1 bis 8, dadurch gekennzeichnet, daß der Haftvermittler der Komponente c) einen MFR im Bereich von 0,5 bis 2,0 g/10 min besitzt, bestimmt gemäß ISO 1133 bei einem Auflagegewicht von 5 kg und einer Temperatur von 230 °C, vorzugsweise von 0,7 bis 1,5 g/10 min.

10. Mischungen nach einem der Ansprüche 1 bis 9, dadurch gekennzeichnet, daß die Menge an Haftvermittler der Einzelkomponente c) im Bereich von 3 bis 6 Gew.-% liegt.

11. Mischungen nach einem der Ansprüche 1 bis 10, dadurch gekennzeichnet, daß sie zusätzlich einen Thermostabilisator auf Basis von sterisch gehinderten Aminen oder von phenolischen Antioxidantien in einer Menge von 0 bis 0,8 Gew.-%, vorzugsweise von 0,3 bis 0,7 Gew.-%, enthalten.

12. Verfahren zum Herstellen einer Mischung gemäß einem oder mehreren der Ansprüche 1 bis 10, dadurch gekennzeichnet, daß die Einzelkomponenten in üblichen Schneckenextrudern gemischt werden, deren Zylindertemperaturen im Bereich von 190 bis 210 °C eingestellt werden, wobei die Massetemperaturen im Bereich von 215 bis 240 °C liegen.

13. Verwendung der Mischungen nach Anspruch 1 zur Herstellung von Formteilen mit verbesserter Kerbschlagzähigkeit und Steifigkeit, insbesondere von Rohren oder Flüssigkeitsbehältern.
